# FASCICULE DE BREVET EUROPEEN

(11) **EP 1 358 084 B1**
(45) Date de publication et mention de la délivrance du brevet: **20.08.2008**
(21) Numéro de dépôt: 02700334.2
(22) Date de dépôt: 18.01.2002
(51) Int. Cl.: B60J 5/10

(54) **HAYON DE VEHICULE AUTOMOBILE AVEC UNE STRUCTURE PARE-CHOC**
HECKKLAPPE EINES PERSONENKRAFTWAGENS MIT STOSSFÄNGER
MOTOR VEHICLE HATCHBACK WITH A BUMPER STRUCTURE

(30) Priorité: 18.01.2001 FR 0100670
(43) Date de publication de la demande: 05.11.2003
(73) Titulaire: Renault, 92100 Boulogne Billancourt (FR); COMPAGNIE PLASTIC OMNIUM, 69342 Lyon Cédex (FR)
(72) Inventeur: BARRAL, Stéphan, F-75006 Paris (FR); VASSEUR, Patrice, F-75007 Paris (FR)
(74) Mandataire: Remy, Vincent Noel Paul
(86) Numéro de dépôt international: PCT/FR2002/000204
(87) Numéro de publication internationale: WO 2002/057103

(56) Documents cités:
- EP-A- 0 635 416
- DE-A- 19 939 558
- FR-A- 2 750 365
- FR-A- 2 768 085
- JP-A- 2002 019 468
- US-A- 4 357 040
- US-A- 4 721 333

## Description

La présente invention se rapporte à un hayon de véhicule automobile, et à un véhicule automobile équipé d'un tel hayon.

Lorsqu'un hayon de véhicule automobile tel que celui décrit dans FR 2768 085, reçoit un choc comme par exemple lors d'un accident, il est souvent nécessaire de le remplacer dans sa totalité, ce qui est très coûteux.

La présente invention a pour but de remédier à cet inconvénient.

On atteint ce but de l'invention avec un hayon de véhicule automobile comprenant une partie formant structure, remarquable en ce qu'il comprend une partie fusible fixée sur ladite partie formant structure de manière à pouvoir encaisser un choc extérieur sans déformer ladite partie formant structure.

Grâce à ces caractéristiques, la partie fusible peut se déformer sous l'effet d'un choc extérieur et dissiper ainsi l'énergie de ce choc sans entraîner de déformation de la partie formant structure.

Pour réparer les effets d'un tel choc, il suffit alors de remplacer la partie fusible déformée, ce qui est relativement peu coûteux tant en pièces détachées qu'en main d'oeuvre.

Suivant d'autres caractéristiques du hayon selon l'invention :
- ladite partie fusible définit un caisson dont le volume est complémentaire de celui défini par ladite partie formant structure,
- l'interface entre ladite partie formant structure et ledit caisson est sensiblement horizontale,
- l'interface entre ladite partie formant structure et ledit caisson est conformée sensiblement en L,
- l'interface entre ladite partie formant structure et ledit caisson est inclinée par rapport à l'horizontale,
- ladite partie fusible comprend une peau extérieure fixée sur ladite partie formant structure et définissant avec celle-ci un volume creux,
- ladite partie fusible forme la partie arrière dudit hayon,
- ladite partie fusible comporte une ouverture destinée à accueillir un dispositif d'éclairage d'une plaque d'immatriculation,
- ladite partie fusible comporte un élément de renfort, qui est un élément de fermeture de la peau extérieure afin de former un volume sensiblement fermé,
- la peau extérieure est fixé à l'élément de renfort par l'intermédiaire d'au moins une fixation fusible,
- la peau extérieure comporte une partie pouvant se déplacer sans interférence avec la structure lors de la rupture des liaisons fusibles,
- ladite partie fusible est fixée dans une zone inférieure de ladite partie formant structure,
- ladite partie fusible est formée au moins en partie en matière plastique.

La présente invention fournit également un véhicule automobile, remarquable en ce qu'il est équipé d'un hayon conforme à ce qui précède.

D'autres caractéristiques et avantages de la présente invention apparaîtront à la lecture de la description qui va suivre et à l'examen du dessin annexé, dans lequel :
- la figure 1 est une vue en perpective d'un véhicule automobile équipé d'un hayon selon l'invention,
- les figures 2 à 5 sont des vues en coupe selon le plan P de la figure 1 de la zone de coopération entre le hayon et le bord inférieur du coffre du véhicule automobile.

Sur ces figures, des références identiques désignent des organes ou ensembles d'organes identiques ou analogues.

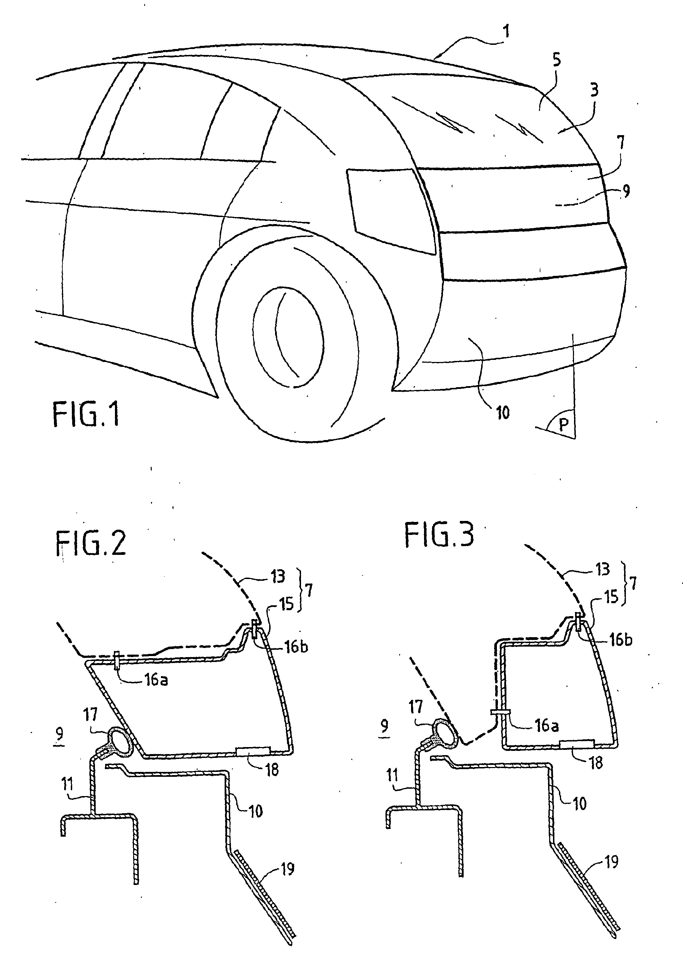

On se reporte à présent à la figure 1, sur laquelle on a représenté un véhicule automobile 1 équipé d'un hayon 3 selon l'invention.

Ce hayon 3 peut comprendre par exemple une partie supérieure vitrée 5 et une partie inférieure opaque 7 permettant de fermer un coffre arrière 9 en se rabattant sur un bouclier (ou pare-chocs) arrière 10.

On se reporte à présent à la figure 2, sur laquelle on a représenté un premier mode de réalisation du hayon 3 se trouvant en position fermée, et coopérant ainsi avec le bord inférieur 11 du coffre arrière 9.

Comme cela apparaît sur cette figure, et selon une caractéristique essentielle de l'invention, le hayon 3 comprend une partie formant structure 13, et une partie fusible 15 fixée sur la partie formant structure 13 par tout moyen approprié tel que des vis 16a, 16b.

Dans le mode de réalisation de la figure 2, la partie fusible 15 définit un caisson dont le volume est complémentaire de celui défini par la partie formant structure 13.

En d'autres termes, la réunion des volumes définis par la partie formant structure 13 et par le caisson 15 forme le volume complet du hayon 3. Ce volume peut-être ouvert partiellement.

L'interface entre la partie formant structure 13 et le caisson 15 peut être sensiblement horizontale, comme cela est visible sur la figure 2, et ce peut être le caisson 15 qui s'appuie contre un joint de coffre 17 lorsque le hayon se trouve en position fermée.

Le caisson 15 peut comprendre, une ouverture 18 destinée à accueillir un dispositif d'éclairage (non représenté) d'une plaque d'immatriculation 19 fixée sur le bouclier arrière 10 ou sur ledit caisson 15. Une ouverture ou une forme, non représentée, peut-être effectuée dans le caisson 15 afin de former une poignée destinée a créer une zone de préhension pour la fermeture ou l'ouverture du hayon.

On a représenté sur la figure 3 une première variante dans laquelle l'interface entre la partie formant structure 13 et le caisson 15 est conformée sensiblement en L.

En d'autres termes, dans cette première variante, le caisson 15 est placé dans un coin formé dans la partie formant structure 13.

On remarquera également que dans cette première variante, c'est la partie formant structure 13 qui s'appuie contre le joint de coffre 17 lorsque le hayon 3 se trouve en position fermée.

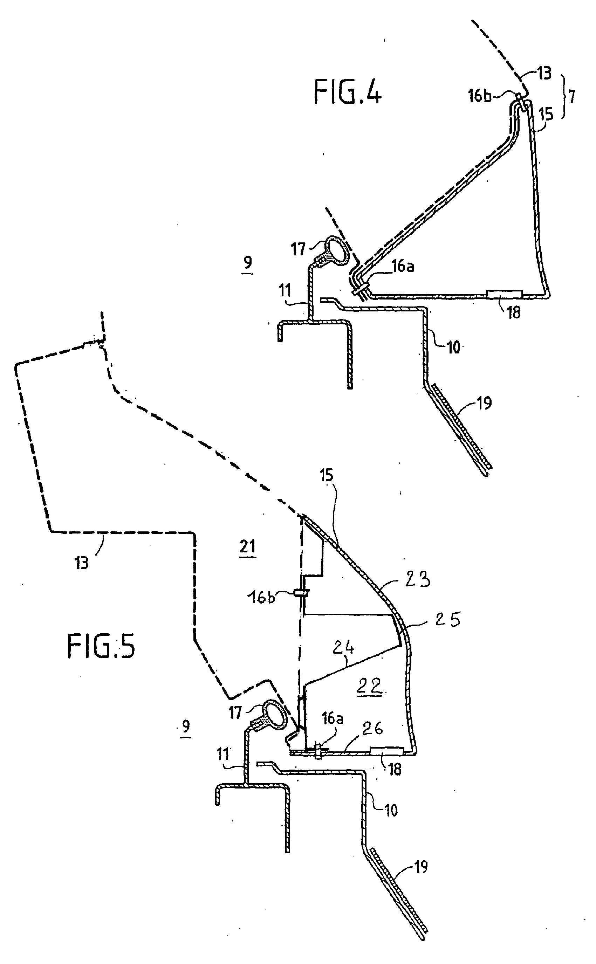

On a représenté sur la figure 4 une deuxième variante dans laquelle l'interface entre la partie formant structure 13 et le caisson 15 est inclinée par rapport à l'horizontale.

On se reporte à présent à la figure 5, sur laquelle on a représenté un deuxième mode de réalisation du hayon 3 selon l'invention.

Ce deuxième mode de réalisation diffère du premier en ceci que la partie fusible comprend une peau extérieure 15 fixée sur la partie formant structure 13 par tout moyen approprié tel que par exemple des vis 16b, et définissant avec cette partie formant structure un volume creux formé par deux parties 21 et 22. Le volume 21 correspond à une zone délimitée par la structure de hayon 13, le volume 22 étant une zone délimitée par le caisson 15. Tel que représenté à la figure 5 le caisson 15 forme l'extrémité arrière du hayon.

Dans l'exemple de réalisation représenté à la figure 5, le caisson 15 est formé de la peau extérieure 23 et d'un élément de renfort 24 portant ladite peau extérieure 23. L'élément de renfort 24 permet de rigidifier ledit caisson 15. L'élément de renfort 24 est, par exemple, un élément de fermeture du caisson 15, tel que représenté à la figure 5. Cet élément de renfort peut-être également inséré à l'intérieur du caisson 15 fermé par la peau extérieure 23. L'élément de renfort 24 peut-être destiné, entre autre, à renforcer une zone de préhension formée dans le caisson 15.

L'élément de renfort 24 peut comporter également des bossages 25 formant une zone d'appui pour la peau extérieure 23 du caisson 15, afin que celle-ci ne se déforme pas, ou peu, lors de la fermeture du hayon réalisée par la pression de la main de l'utilisateur.

On a représenté à la figure 5 le caisson 15 fixé, par sa partie supérieure, à la structure 13 par l'intermédiaire de vis 16b. Cette fixation peut également fixer la peau extérieure 23 entre la structure 13 et l'élément de renfort 24. D'autres vis peuvent être localisées dans des zones différentes. Les vis 16b peuvent être fusible sous un effort inférieur à la déformation de la structure 13.

Dans la partie inférieure du caisson 15 la peau extérieure 23 est fixée à l'élément de renfort 24 par l'intermédiaire de vis 16a. Les vis 16a sont fusibles lors d'un choc arrière, produisant ainsi le glissement d'une partie 26 de la peau extérieure 23 sans interférence avec la structure 13.

L'élément de renfort peut-être utilisé de la même façon dans les solutions représentées aux figures 2 à 4.

De préférence, comme cela est le cas pour les premier et deuxième modes de réalisation décrits ci-dessus, la partie fusible 15 est fixée dans une zone inférieure de la partie formant structure 13, c'est-à-dire dans une zone qui est adjacente au bouclier 10 lorsque le hayon 3 se trouve en position fermée.

De préférence également, la partie formant structure 13 est formée en tôle, et la partie fusible 15 est formée au moins en partie en matière plastique.

Les avantages du hayon selon l'invention résultent directement de ce qui précède.

La partie fusible 15 peut se déformer sous l'effet d'un choc extérieur et dissiper ainsi l'énergie de ce choc sans entraîner de déformation de la partie formant structure 13.

Pour réparer les effets d'un tel choc, il suffit alors de remplacer la partie fusible déformée, ce qui est relativement peu coûteux tant en pièces détachées qu'en main d'oeuvre.

On notera en outre que l'effet dissipateur d'énergie permet d'atténuer les répercussions d'un choc sur les passagers du véhicule 1.

Lorsque la partie fusible 15 est placée dans une zone inférieure de la partie formant structure 13, c'est-à-dire juste au-dessus du bouclier arrière 10 lorsque le hayon 3 se trouve en position fermée, cette partie fusible peut encaisser le choc de l'avant d'un véhicule suivant le véhicule 1 sans déformer la partie formant structure 13 (le test d'intrusion correspondant à une telle situation étant connu sous le nom de « choc Danner »).

Bien entendu, la présente invention n'est pas limitée aux modes de réalisation décrits et représentés, fournis à titre illustratif et non limitatif.

## Revendications

1. Hayon (3) de véhicule automobile (1) comprenant une partie formant structure (13) et une partie fusible (15) fixée sur ladite partie formant structure (13) ,placée dans une zone inférieure de la partie formant structure (13), c'est-à-dire juste au-dessus du boudier arrière (10) de vehicule lorsque le harpon set trouve en pesition fermée, de manière à pouvoir encaisser un choc extérieur sans déformer ladite partie formant structure (13), **caractérisé en ce que** ladite partie fusible (15) définit un caisson dont le volume est complémentaire de celui défini par ladite partie formant structure (13) ,de sorte que pour rèparer les effets d'un tet choc, it suffit alors de remplacer la partie fusible (15) defermèe.

2. Hayon (3) selon la revendication 1, **caractérisé en ce que** l'interface entre ladite partie formant structure (13) et ledit caisson (15) est sensiblement horizontale.

3. Hayon (3) selon la revendication 1, **caractérisé en ce que** l'interface entre ladite partie formant structure (13) et ledit caisson (15) est conformée sensiblement en L.

4. Hayon (3) selon la revendication 1, **caractérisé en ce que** l'interface entre ladite partie formant structure (13) et ledit caisson (15) est inclinée par rapport à l'horizontale.

5. Hayon (3) selon l'une quelconque des revendications précédentes, **caractérisé en ce que** ladite partie fusible (15) est fixée dans une zone inférieure de Ladite partie formant structure (13).

6. Hayon (3) selon l'une quelconque des revendications 1 à 5, **caractérisé en ce que** ladite partie fusible (15) forme la partie arrière dudit hayon (3).

7. Hayon (3) selon l'une quelconque des revendications précédentes, **caractérisé en ce que** ladite partie fusible (15) est formée au moins en partie en matière plastique.

8. Hayon (3) selon l'une quelconque des revendications précédentes, **caractérisé en ce que** ladite partie fusible (15) comporte une ouverture (18) destinée à accueillir un dispositif d'éclairage d'une plaque d'immatriculation.

9. Hayon (3) selon l'une quelconque des revendications précédentes, **caractérisé en ce que** ladite partie fusible (15) comporte un élément de renfort (24).

10. Hayon (3) selon la revendication 9, **caractérisé en ce que** l'élément de renfort (24) est un élément de fermeture de la peau extérieure (23) afin de former un volume sensiblement fermé.

11. Hayon (3) selon l'une quelconque des revendications 9 à 10, **caractérisé en ce que** la peau extérieure (23) est fixé à l'élément de renfort (24) par l'intermédiaire d'au moins une fixation fusible (16a).

12. Hayon (3) selon la revendication 11, **caractérisé en ce que** la peau extérieure (23) comporte une partie (26) pouvant se déplacer sans interférence avec la structure (13) lors de la rupture des liaisons fusibles (16a).

13. Hayon selon l'une quelconque des revendications précédentes, dans lequel la partie fusible (15) peut encaisser le choc de l'avant d'un véhicule suivant le véhicule (1) sans déformer la partie formant structure (13), le choc correspondant de préférence à un test d'intrusion connu sous le nom de "choc Danner".

14. Véhicule automobile (1), **caractérisé en ce qu'**il est équipé d'un hayon (3) conforme à l'une quelconque des revendications précédentes.

## Claims

1. A tailgate (3) for a motor vehicle (1), the tailgate comprising a structure-forming portion (13) and a breakable portion (15) fastened to said structure-forming portion (13), placed in a low zone of the structure-forming portion (13), i.e. immediately above the rear shield (10) of the vehicle when the tailgate is in the closed position, in such a manner as to be capable of absorbing an external impact without deforming said structure-forming portion (13), the tailgate being **characterized in that** said breakable portion (15) defines a box of volume that is complementary to the volume defined by said structure-forming portion (13), such that in order to repair the effects of such an impact, it suffices to replace the deformed breakable portion (15).

2. A tailgate (3) according to claim 1, **characterized in that** the interface between said structure-forming portion (15) and said box (15) is substantially horizontal.

3. A tailgate (3) according to claim 1, **characterized in that** the interface between said structure-forming portion (13) and said box (15) is substantially L-shaped.

4. A tailgate (3) according to claim 1, **characterized in that** the interface between said structure-forming (13) and said box (15) slopes relative to the horizontal.

5. A tailgate (3) according to any preceding claim, **characterized in that** said breakable portion (15) is fastened to a bottom zone of said structure-forming portion (13).

6. A tailgate (3) according to any one of claims 1 to 5, **characterized in that** said breakable portion (15) forms the rear portion of said tailgate (3).

7. A tailgate (3) according to any preceding claim, **characterized in that** said breakable portion (15) is made at least in part out of plastics material.

8. A tailgate (3) according to any preceding claim, **characterized in that** said breakable portion (15) includes an opening (18) for receiving a device for lighting a number plate.

9. A tailgate (3) according to any preceding claim, **characterized in that** said breakable portion (15) includes a reinforcing element (24).

10. A tailgate (3) according to claim 9, **characterized in that** the reinforcing element (24) is an element for closing the outer skin (23) so as to form a substantially closed volume.

11. A tailgate (3) according to claim 9 or claim 10, **characterized in that** the outer skin (23) is fastened to the reinforcing element (24) via at least one breakable fastening (16a).

12. A tailgate (3) according to claim 11, **characterized in that** the outer skin (23) includes a portion (26) capable of moving without interfering with the structure (13) in the event of the breakable connections (16a) breaking.

13. A tailgate (3) according to any preceding claim, in which the breakable portion (15) can absorb the impact from the front of a vehicle following the vehicle (1) without deforming the structure-forming portion (13), the impact preferably corresponding to an intrusion test known under the name "Danner impact".

14. A motor vehicle (1), **characterized in that** it is fitted with a tailgate (3) in accordance with any preceding claim.

## Patentansprüche

1. Heckklappe (3) eines Kraftfahrzeugs (1), die einen strukturbildenden Abschnitt (13) und einen Sollbruchstellenabschnitt (15) umfasst, der auf dem strukturbildenden Abschnitt (13) befestigt ist und sich in einem Bereich befindet, der unterhalb des strukturbildenden Abschnitt (13), d.h. gerade oberhalb des hinteren Stoßfängers (10) des Fahrzeugs, liegt, wenn sich die Heckklappe in einer geschlossenen Position befindet, so dass er einem Aufprall von außen widerstehen kann, ohne den strukturbildenden Abschnitt zu verformen, **dadurch gekennzeichnet, dass** der Sollbruchstellenabschnitt (15) einen Kasten definiert, dessen Volumen komplementär zu demjenigen ist, das durch den strukturbildenden Abschnitt (13) dergestalt definiert wird, dass es für die Reparatur der Auswirkungen eines solchen Aufpralls ausreichend ist, den verformten Sollbruchstellenabschnitt (15) auszutauschen.

2. Heckklappe (3) nach Anspruch 1, **dadurch gekennzeichnet, dass** der Berührungsbereich zwischen dem strukturbildenden Bereich (13) und dem Kasten (15) im Wesentlichen horizontal verläuft.

3. Heckklappe (3) nach Anspruch 1, **dadurch gekennzeichnet, dass** der Berührungsbereich zwischen dem strukturbildenden Bereich (13) und dem Kasten (15) im Wesentlichen eine L-Form aufweist.

4. Heckklappe (3) nach Anspruch 1, **dadurch gekennzeichnet, dass** der Berührungsbereich zwischen dem strukturbildenden Bereich (13) und dem Kasten (15) in Bezug auf die Horizontale eine Neigung aufweist.

5. Heckklappe (3) nach einem der vorhergehenden Ansprüche, **dadurch gekennzeichnet, dass** der Sollbruchstellenabschnitt (15) in einem Bereich fixiert ist, der unterhalb des strukturbildenden Abschnitts (13) liegt.

6. Heckklappe (3) nach einem der Ansprüche 1 bis 5, **dadurch gekennzeichnet, dass** der Sollbruchstellenabschnitt (15) den hinteren Bereich der Heckklappe (3) bildet.

7. Heckklappe (3) nach einem der vorhergehenden Ansprüche, **dadurch gekennzeichnet, dass** der Sollbruchstellenabschnitt (15) zumindest teilweise aus Kunststoff besteht.

8. Heckklappe (3) nach einem der vorhergehenden Ansprüche, **dadurch gekennzeichnet, dass** der Sollbruchstellenabschnitt (15) eine Öffnung (18) aufweist, die zur Aufnahme einer Nummernschild-Beleuchtungsvorrichtung vorgesehen ist.

9. Heckklappe (3) nach einem der vorhergehenden Ansprüche, **dadurch gekennzeichnet, dass** der Sollbruchstellenabschnitt (15) ein Verstärkungselement (24) aufweist.

10. Heckklappe (3) nach Anspruch 9, **dadurch gekennzeichnet, dass** es sich bei dem Verstärkungselement (24) um ein Verschlusselement der Außenverkleidung (23) handelt, so dass ein im Wesentlichen geschlossenes Volumen gebildet wird.

11. Heckklappe (3) nach einem der Ansprüche 9 oder 10, **dadurch gekennzeichnet, dass** die Außenverkleidung (23) an dem Verstärkungselement (24) mit Hilfe von mindestens einer als Sollbruchstelle ausgebildeten Befestigung fixiert ist.

12. Heckklappe (3) nach Anspruch 11, **dadurch gekennzeichnet, dass** die Außenverkleidung (23) einen Abschnitt (26) aufweist, der sich beim Bruch der als Sollbruchstellen ausgebildeten Verbindungen verschieben kann, ohne dass dies durch die Struktur (13) behindert wird.

13. Heckklappe (3) nach einem der vorhergehenden Ansprüche, bei der der Sollbruchstellenabschnitt (15) dem Aufprall auf das Vorderteil des Fahrzeugs widerstehen kann und sich dem Fahrzeug (1) mitteilt, ohne den strukturbildenden Abschnitt (13) zu verformen, wobei es sich bei dem Aufprall vorzugsweise um einen unter der Bezeichnung "Danner-Aufprall" bekannten Eindringtest handelt.

14. Kraftfahrzeug (1), **dadurch gekennzeichnet, dass** es mit einer Heckklappe (3) nach einem der vorhergehenden Ansprüche ausgerüstet ist.
